(19) Europäisches Patentamt
European Patent Office
Office européen des brevets

(11) EP 2 778 182 A1

(12) EUROPEAN PATENT APPLICATION

(43) Date of publication:
**17.09.2014 Bulletin 2014/38**

(51) Int Cl.:
***C08F 210/16*** *(2006.01)*

(21) Application number: **13159360.0**

(22) Date of filing: **15.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basell Poliolefine Italia S.r.l.**
**20127 Milano (IT)**

(72) Inventors:
- **Galvan, Monica**
  **44122 Ferrara (IT)**
- **Neumann, Andreas**
  **44122 Ferrara (IT)**
- **Caputo, Tiziana**
  **44122 Ferrara (IT)**
- **Squarzoni, Stefano**
  **44122 Ferrara (IT)**
- **Mazzucco, Antonio**
  **44122 Ferrara (IT)**
- **Fusco, Ofelia**
  **44122 Ferrara (IT)**
- **Gaddi, Benedetta**
  **44122 Ferrara (IT)**
- **Collina, Gianni**
  **44122 Ferrara (IT)**

(74) Representative: **Colucci, Giuseppe**
**Basell Poliolefine Italia S.r.l.**
**Intellectual Property**
**Piazzale G. Donegani 12**
**44122 Ferrara (IT)**

# (54) Process for the preparation of propylene terpolymers and terpolymers obtained thereby

(57) A process for the preparation of propylene terpolymers by copolymerizing propylene, ethylene and an alpha-olefin selected from the group of C4-C8 alpha-olefins in the presence of a catalyst system obtained by contacting a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other selected from 1,3 diethers, an aluminum hydrocarbyl compound, and optionally an external electron donor compound.

EP 2 778 182 A1

## Description

The present invention relates to a process for the preparation of propylene terpolymers and to propylene terpolymers obtained thereby. The propylene terpolymers obtained by the process of the present invention are suitable to be used in film applications, particularly for mono- and bi-oriented films and for heat-sealable films.

Propylene copolymers and terpolymers have been used in film applications because, with respect to propylene homopolymers, are characterized by a better impact, lower rigidity and better transparency. It is however difficult to find an acceptable balance between those properties that are often contrasting. For example, when a certain softness is desired, that is commonly obtained in the presence of high amount of xylene-soluble fractions that make them unsuitable for food contact applications. Moreover, for heat-seal applications it is important to have a sufficiently wide processability window, i.e. the range of temperatures comprised between the melting point and the seal initiation temperature. International application WO 2009/019169 describes a process for producing terpolymers of propylene, ethylene and other alpha-olefins in a gas-phase reactor comprising two interconnected polymerization zones. The process is carried out in the presence of conventional Ziegler-Natta catalysts comprising a phthalate-based electron donor. The obtained terpolymers show a quite good combination of properties. There still exists the need to obtain propylene terpolymers endowed with further improved properties, particularly with respect to their low seal initiation temperature with as little as possible comonomer amount coupled with a sufficiently wide processability window. It has been found that those and other results can be achieved by using a specific class of Ziegler-Natta catalysts in the preparation of propylene terpolymers.

Thus, according to a first object, the present invention provides a process for the preparation of a propylene terpolymer comprising comonomer units derived from ethylene and from an alpha-olefin selected from the group of C4-C8 alpha-olefins, the process comprising the step of copolymerizing propylene, ethylene and an alpha-olefin selected from the group of C4-C8 alpha-olefins in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

Throughout the application, the term "C4-C8 alpha-olefins" stands for alpha-olefins having 4 to 8 carbon atoms.

In the solid catalyst component (a) the succinate is preferably selected from succinates of formula (I):

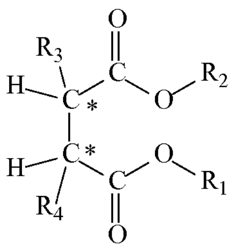

(I)

in which the radicals R1 and R2, equal to, or different from, each other are a C1-C20 linear or branched alkyl, alkenyl, cycloalkyl, aryl, arylalkyl or alkylaryl group, optionally containing heteroatoms; and the radicals R3 and R4 equal to, or different from, each other, are C1-C20 alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)

R1 and R2 are preferably C1-C8 alkyl, cycloalkyl, aryl, arylalkyl and alkylaryl groups. Particularly preferred are the compounds in which R1 and R2 are selected from primary alkyls and in particular branched primary alkyls. Examples of suitable R1 and R2 groups are methyl, ethyl, n-propyl, n-butyl, isobutyl, neopentyl, 2-ethylhexyl. Particularly preferred are ethyl, isobutyl, and neopentyl.

Particularly preferred are the compounds in which the R3 and/or R4 radicals are secondary alkyls like isopropyl, sec-butyl, 2-pentyl, 3-pentyl or cycloakyls like cyclohexyl, cyclopentyl, cyclohexylmethyl. Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II):

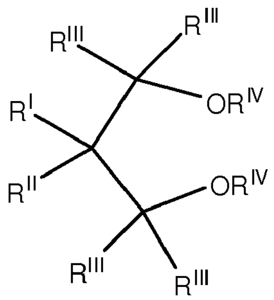

(II)

where RI and RII are the same or different and are hydrogen or linear or branched C1-C18 hydrocarbon groups which can also form one or more cyclic structures; RIII groups, equal or different from each other, are hydrogen or C1-C18 hydrocarbon groups; RIV groups equal or different from each other, have the same meaning of RIII except that they cannot be hydrogen; each of RI to RIV groups can contain heteroatoms selected from halogens, N, O, S and Si.

Preferably, RIV is a 1-6 carbon atom alkyl radical and more particularly a methyl while the RIII radicals are preferably hydrogen. Moreover, when RI is methyl, ethyl, propyl, or isopropyl, RII can be ethyl, propyl, isopropyl, butyl, isobutyl, tert-butyl, isopentyl, 2-ethylhexyl, cyclopentyl, cyclohexyl, methylcyclohexyl, phenyl or benzyl; when RI is hydrogen, RII can be ethyl, butyl, sec-butyl, tert-butyl, 2-ethylhexyl, cyclohexylethyl, diphenylmethyl, p-chlorophenyl, 1-naphthyl, 1-decahydronaphthyl; RI and RII can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III):

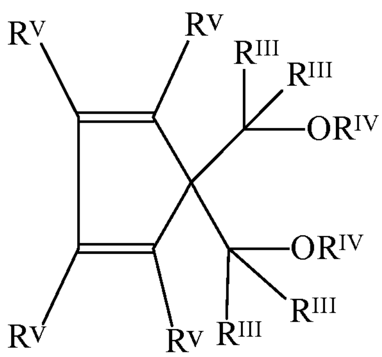

(III)

where the radicals RIV have the same meaning explained above and the radicals RIII and RV radicals, equal or different to each other, are selected from the group consisting of hydrogen; halogens, preferably Cl and F; C1-C20 alkyl radicals,

linear or branched; C3-C20 cycloalkyl, C6-C20 aryl, C7-C20 alkaryl and C7-C20 aralkyl radicals and two or more of the RV radicals can be bonded to each other to form condensed cyclic structures, saturated or unsaturated, optionally substituted with RVI radicals selected from the group consisting of halogens, preferably Cl and F; C1-C20 alkyl radicals, linear or branched; C3-C20 cycloalkyl, C6-C20 aryl, C7-C20 alkaryl and C7-C20 aralkyl radicals; said radicals RV and RVI optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Specially preferred are the compounds of formula (IV):

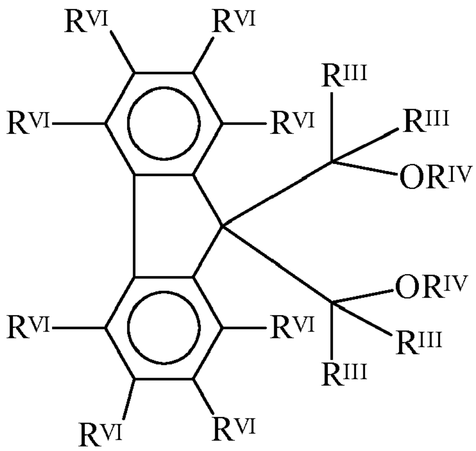

(IV)

where the RVI radicals equal or different are hydrogen; halogens, preferably Cl and F; C1-C20 alkyl radicals, linear or branched; C3-C20 cycloalkyl, C6-C20 aryl, C7-C20 alkylaryl and C7-C20 aralkyl radicals, optionally containing one or more heteroatoms selected from the group consisting of N, 0, S, P, Si and halogens, in particular Cl and F, as substitutes for carbon or hydrogen atoms, or both; the radicals RIII and RIV are as defined above for formula (II).

Specific examples of compounds comprised in formulae (II) and (III) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3 -trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;

1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably MgCl2 in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line. The preferred titanium compounds used in the catalyst component of the present invention are TiC14 and TiC13; furthermore, also Ti-haloalcoholates of formula Ti(OR)n-yXy can be used, where n is the valence of titanium, y is a number between 1 and n-1X is halogen and R is a hydrocarbon radical having from 1 to 10 carbon atoms.

Preferably, the catalyst component (a) has an average particle size ranging from 15 to 80 μm, more preferably from 20 to 70 μm and even more preferably from 25 to 65 μm. As explained the succinate is present in an amount ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-A1 compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt2Cl and Al2Et3Cl3.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Ra5Rb6Si(OR7)c, where a and b are integer from 0 to 2, c is an integer from 1 to 3 and the sum (a+b+c) is 4; R5, R6, and R7, are alkyl, cycloalkyl or aryl radicals with 1-18 carbon atoms optionally containing heteroatoms. Particularly preferred are diisopropyldimethoxysilane, dicyclopentyldimethoxysilane, methylcyclohexyldimethoxysilane, diphenyldimethoxysilane, methyl-t-butyldimethoxysilane, 2-ethylpiperidinyl-2-t-butyldimethoxysilane, 1,1,1 ,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 5 to 25

minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is discharged from the pre-polymerization reactor and f ed to a gas-phase or liquid-phase polymerization reactor. In case of a gas-phase reactor, it generally consists of a fluidized or stirred, fixed bed reactor or a reactor comprising two interconnected polymerization zones one of which, working under fast fluidization conditions and the other in which the polymer flows under the action of gravity. The liquid phase process can be either in slurry, solution or bulk (liquid monomer). This latter technology can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Hydrogen can be used as a molecular weight regulator.

According to another aspect, the present invention provides a terpolymer of propylene comprising comonomer units derived from ethylene and from an alpha-olefin selected from the group of C4-C8 alpha-olefins, obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

The propylene terpolymers of the present invention contain preferably from 0.5 to 6 % by weight, more preferably from 0.6 to 4 % by weight, even more preferably from 0.7 to 3 % by weight of ethylene units, and preferably from 2.5 to 15 % by weight, more preferably from 3.5 to 13 % by weight, even more preferably from 5 to 11 % by weight of C4-C8 alpha-olefin units.

The terpolymers of the present invention have the following preferred features:

- melting point (Tm) ranging from 120 to 140 °C, preferably from 128 to 136 °C;
- seal initiation temperature (SIT) ranging from 100 to 120 °C, preferably from 103 to 117 °C;
- melt flow rate (MFR) values according to ISO 1133 (230°C, 2.16 Kg) generally ranging from 0.1 to 100 g/10min, preferably from 0.2 to 50 g/10min;
- an amount of fraction soluble in xylene generally lower than 18 %, preferably lower than 16 %, more preferably lower than 14 %;
- an amount of fraction soluble in hexane generally lower than 4.5 %, preferably lower than 4.0 %, more preferably lower than 3.8 %.

The terpolymers of the present invention have the additional advantage that the films produced therefrom do not contain phthalate residues.

The terpolymers of the present invention can also contain additives commonly employed in the art, such as antioxidants, light stabilizers, heat stabilizers, nucleating agents, colorants and fillers. Particularly, they can comprise an inorganic filler agent in an amount ranging from 0.5 to 60 parts by weight with respect to 100 parts by weight of the said heterophasic polyolefin composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.5 to 5 wt% with respect to the polymer amount.

If necessary, the molecular weight of the terpolymers can be modified by visbreaking according to well-known techniques.

Preferred C4-C8 alpha-olefins for use in the preparation of the terpolymers of the invention are 1-butene, 1-hexene and 1-octene, the most preferred being 1-butene.

According to another aspect, the present invention provides a terpolymer of propylene, ethylene and 1-butene comprising from 0.5 to 6 % by weight of ethylene units and from 2.5 to 15 % by weight of 1-butene units, wherein:

a. the melting point (Tm) is higher than 131°C, and
b. the % by weight of ethylene units (C2), the % by weight of 1-butene units (C4), and the sealing initiation temperature

(SIT) satisfy the following relation:

$$7(C2) + 3.2(C4) + SIT \leq 150$$

Preferably 7(C2) + 3.2(C4) + SIT ≤149, more preferably 7(C2) + 3.2(C4) + SIT ≤148, even more preferably 7(C2) + 3.2(C4) + SIT ≤147, further even more preferably 7(C2) + 3.2(C4) + SIT ≤146. Selected terpolymers satisfy the relation 7(C2) + 3.2(C4) + SIT ≤145 and even 7(C2) + 3.2(C4) + SIT ≤144. The sign "≤" stands for "less than or equal to".

The melting point (Tm) of the terpolymers of propylene, ethylene and 1-butene according to the present invention is preferably higher than 132°C, more preferably higher than 133°C.

The terpolymers of propylene, ethylene and 1-butene according to the invention contain preferably from 0.6 to 4 % by weight, more preferably from 0.7 to 3 % by weight of ethylene units, and preferably from 3.5 to 13 % by weight, more preferably from 5 to 11 % by weight of 1-butene units. The terpolymers of the present invention can be used to prepare films endowed with excellent sealing behavior. Thus, another object of the invention is a film obtained from a terpolymer of propylene comprising comonomer units derived from ethylene and from an alpha-olefin selected from the group of C4-C8 alpha-olefins, obtainable by a process comprising the step of copolymerizing propylene, ethylene and an alpha-olefin selected from the group of C4-C8 alpha-olefins in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

The alpha-olefin selected from the group of C4-C8 alpha-olefins is preferably 1-butene.

Of particular interest are the films obtained from a terpolymer of propylene, ethylene and 1-butene comprising from 0.5 to 6 % by weight of ethylene units and from 2.5 to 15 % by weight of 1-butene units, wherein

c. the melting point (Tm) is higher than 131°C, and
d. the % by weight of ethylene units (C2), the % by weight of 1-butene units (C4), and the sealing initiation temperature (SIT) satisfy the following relation:

$$7(C2) + 3.2(C4) + SIT \leq 150$$

The thus obtained films, due to their excellent sealing properties, good optical properties and good shrinkage behavior and softness, are suitable for use in cast films, mono- and bi-oriented films and heat-sealable films.

The following examples are given to illustrate the present invention without any limiting purpose.

**Methods**

Molar ratio of feed gases

Determined by gas-chromatography.

Average Particle Size of the adduct and catalysts

Determined by a method based on the principle of the optical diffraction of monochromatic laser light with the "Malvern Instr. 2600" apparatus. The average size is given as P50.

Comonomer content

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$

Sample Preparation - Using a hydraulic press, a thick sheet was obtained by pressing about g 1 of sample between two aluminum foils. A small portion was cut from this sheet to mold a film. Recommended film thickness ranges between 0.02 and 0.05 cm (8 - 20 mils). Pressing conditions ware 180±10°C (356°F) and about 10 kg/cm2 (142.2 PSI) pressure for about one minute. The pressure was then released, the sample removed from the press and cooled to room temperature.

The spectrum of pressed film sample was recorded in absorbance vs. wavenumbers (cm-1). The following measurements were used to calculate ethylene and 1-butene content:

- Area (At) of the combination absorption bands between 4482 and 3950 $cm^{-1}$ used for spectrometric normalization of film thickness;
- Area (AC2) of the absorption band between 750-700 $cm^{-1}$ after two proper consecutive spectroscopic subtractions of an isotactic non-additivated polypropylene spectrum and then of a reference spectrum of an 1-butene-propylene random copolymer in the range 800-690 $cm^{-1}$;
- Height (DC4) of the absorption band at 769 $cm^{-1}$ (maximum value), after two proper consecutive spectroscopic subtractions of an isotactic non-additivated polypropylene spectrum and then of a reference spectrum of an ethylene-propylene random copolymer in the range 800-690 $cm^{-1}$.

In order to calculate the ethylene and 1-butene content, calibration straights lines for ethylene and 1-butene obtained by using samples of known amount of ethylene and 1-butene are needed:

Calibration for ethylene - A calibration straight line is obtained by plotting AC2/At versus ethylene molar percent (%C2m). The slope GC2 is calculated from a linear regression.
Calibration for 1-butene - A calibration straight line is obtained by plotting DC4/At versus butene molar percent (%C4m). The slope GC4 is calculated from a linear regression.

The spectra of the unknown samples are recorded and then (At), (AC2) and (DC4) of the unknown sample are calculated. The ethylene content (% molar fraction C2m) of the sample was calculated as follows:

$$\%C2m = \frac{1}{G_{C2}} \cdot \frac{A_{C2}}{A_t}$$

The 1-butene content (% molar fraction C4m) of the sample was calculated as follows:

$$\%C4m = \frac{1}{G_{C4}} \cdot \left(\frac{A_{C4}}{A_t} - I_{C4}\right)$$

The propylene content (molar fraction C3m) was calculated as follows:

$$C3m = 100 - \%C4m - \%C2m$$

The ethylene, 1-butene contents by weight were calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

Melt flow rate (MFR "L")

Determined according to ISO 1133 (230°C, 2.16 Kg)

Melting point (Tm)

The melting point or melting temperature was determined by differential scanning calorimetry (DSC) according to the ASTM D 3417 method, which is equivalent to the ISO 11357/1 and 3 method.

Sealing Initiation Temperature (S.I.T.)

A 50 μm cast film was prepared from the obtained propylene terpolymers by extrusion by means of a single screw Collin extruder (30mm D, 25 L/D) at a film drawing speed of 7 m/min and a melt temperature of 210-250 °C. The resulting film was overlapped to a 1000 μm thick sheet of polypropylene homopolymer having an isotacticity index of 97 and a MFR L of 2 g/10 min. The overlapped films were then bonded each other by means of a compression molding Collin press at 200 °C under a 35 $Kg/cm^2$ pressure maintained for 5 minutes. The resulting plaques were stretched longitudinally and transversally, i.e. biaxially, by a factor 7 with a Brueckner film stretcher at 160 °C, thus obtaining a 20 μm thick film (18 μm homopolymer + 2 μm testing material). 2 x 5 cm specimens were then cut from the obtained stretched film. For each test, two cast film specimens were overlapped and then sealed along one of the 5 cm sides with a Brugger Feinmechanik Sealer, model HSG-ETK 745. Sealing time was 5 seconds at a pressure of 20psi. The sealing temperature was increased for each seal, starting from about 10 °C less than the melting temperature of the test composition. The sealed samples were left to cool, cut 2 cm width and then their unsealed ends were attached to an Instron machine where they were tested at a traction speed of 50 mm/min. The S.I.T. is defined as the temperature at which five of six specimens tested have a force ≥2N.

Xylene solubles

Determined as follows: 2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Hexane solubles

Determined according to FDA 177.1520, by suspending in an excess of hexane a 100 μm thick film specimen of the composition being analyzed, in an autoclave at 50 °C for 2 hours. The hexane is then removed by evaporation and the dried residue is weighed.

**Examples 1-2**

Preparation of the solid catalyst component

Into a 500 mL four-necked round flask, purged with nitrogen, 250 mL of $TiCl_4$ were introduced at 0°C. While stirring, 10.0 g of microspheroidal $MgCl_2 \cdot 1C_2H_5OH$ having average particle size of 47μm (prepared in accordance with the method described in example 1 of EP728769) and an amount of diethyl 2,3-diisopropylsuccinate such as to have a Mg/succinate molar ratio of 15 were added. The temperature was raised to 100°C and kept at this value for 60min. After that the stirring was stopped and the liquid was siphoned off. After siphoning, fresh $TiCl_4$ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh $TiCl_4$ was added. Then

the temperature was raised to 90°C for 15min. After sedimentation and siphoning at 90°C the solid was washed six times with anhydrous hexane (6 x 100 ml) at 60 °C. The obtained solid catalyst component had a total amount of internal electron donor compounds of 12.0% by weight with respect to the weight of the solid catalyst component.

Preparation of the catalyst system - Precontact

Before introducing it into the polymerization reactors, the solid catalyst component described above is contacted with aluminum-triethyl (TEAL) and with di-iso-propyl-di-metoxy-silane (DIPMS) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1. Polymer and film characterization data are reported in Table 2.

**Example 3**

It was worked according to the procedure described for examples 1-2, except that di-cyclopentyl-di-metoxy-silane was used in place of di-iso-propyl-di-metoxy-silane. Process conditions are reported in Table 1 and polymer/film characterization data are reported in Table 2.

**Example 4 (comparative)**

Example 3 of WO 2009/019169.

Table 1 - Polymerization conditions

| Example | 1 | 2 | 3 |
|---|---|---|---|
| **Precontact** | | | |
| Temperature (°C) | 15 | 15 | 15 |
| Residence time (min) | 14 | 14 | 12 |
| Catalyst (g/h) | 2.3 | 3.3 | 9.3 |
| Teal (g/h) | 17 | 20 | 80 |
| Teal/donor ratio (g/g) | 3.5 | 3.2 | 4.0 |
| **Prepolymerization** | | | |
| Temperature (°C) | 30 | 30 | 30 |
| Residence time (min) | 8.5 | 6.3 | 9.0 |
| Prepolymerization degree (g pol./g cat.) | 300 | 300 | 300 |
| **Polymerization** | | | |
| Temperature (°C) | 72 | 71 | 71 |
| Pressure (barg) | 24 | 21 | 21 |
| Residence time (min) | 80 | 80 | 119 |
| $C_2^-$ /C2- + C3- (mol/mol) | 0.017 | 0.007 | 0.01 |
| $C_4^-$ /C4- + C3- (mol/mol) | 0.075 | 0.15 | 0.18 |

(continued)

| Polymerization | | | |
|---|---|---|---|
| $H_2/C_3^-$ (mol/mol) | 0.01 | 0.044 | 0.035 |

Table 2 - Polymer and film characterization

| Example | | 1 | 2 | 3 | 4 (comp.) |
|---|---|---|---|---|---|
| Ethylene content | % | 2.1 | 0.9 | 0.8 | 1.2 |
| 1-Butene content | % | 4.8 | 9.7 | 10.8 | 11.3 |
| MFR "L" | g/10' | 5.2 | 4.0 | 7 | 5.1 |
| Melting point (Tm) | °C | 135.3 | 134.6 | 133.3 | 130.4 |
| S.I.T. | °C | 113 | 108 | 105 | 107.4 |
| 7(C2) + 3.2(C4) + SIT | | 143.06 | 145.34 | 146.16 | 151.96 |
| Xylene solubles | wt% | 6.9 | 9.2 | 12.2 | 19.6 |
| Hexane solubles | wt% | 1.7 | 2.8 | 3.2 | 2.8 |

## Claims

1. A process for the preparation of a propylene terpolymer comprising comonomer units derived from ethylene and from an alpha-olefin selected from the group of C4-C8 alpha-olefins, the process comprising the step of copolymerizing propylene, ethylene and an alpha-olefin selected from the group of C4-C8 alpha-olefins in the presence of a catalyst system comprising the product obtained by contacting the following components:

   (a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
   (b) an aluminum hydrocarbyl compound, and
   (c) optionally an external electron donor compound.

2. The process according to claim 1, wherein the succinate is of formula (I):

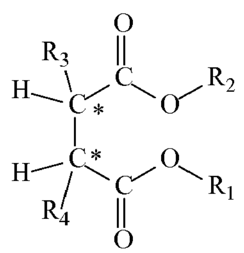

(I)

wherein the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S).

3. The process according to any of claims 1 or 2, wherein the 1,3-diether is of formula (II):

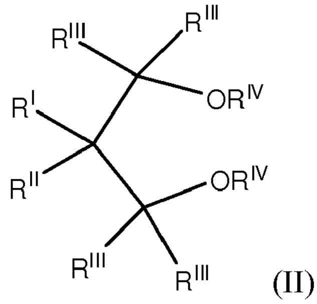

(II)

wherein $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

**4.** The process according to any of claims 1 to 3, wherein the catalyst component (a) has an average particle size ranging from 15 to 80 μm.

**5.** The process according to any of claims 1 to 4, wherein the succinate is present in amount ranging from 40 to 90% by mol with respect to the total amount of internal donors.

**6.** A terpolymer of propylene comprising comonomer units derived from ethylene and from an alpha-olefin selected from the group of C4-C8 alpha-olefins, obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

**7.** The terpolymer of propylene according to claim 6, wherein the alpha-olefin selected from the group of C4-C8 alpha-olefins is 1-butene.

**8.** A terpolymer of propylene, ethylene and 1-butene comprising from 0.5 to 6 % by weight of ethylene units and from 2.5 to 15 % by weight of 1-butene units, wherein

a. the melting temperature is higher than 131°C, and
b. the % by weight of ethylene units (C2), the % by weight of 1-butene units (C4), and the sealing initiation temperature (SIT) satisfy the following relation:

$$7(C2) + 3.2(C4) + SIT \leq 150$$

**9.** A film obtained from a terpolymer of propylene according to any of claims 6 to 8.

Europäisches Patentamt
European Patent Office
Office européen des brevets

# EUROPEAN SEARCH REPORT

Application Number
EP 13 15 9360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 221 984 B1 (KERSTING MEINOLF [DE] ET AL) 24 April 2001 (2001-04-24)<br>* example 2 *<br>----- | 8,9 | INV.<br>C08F210/16 |
| A | WO 2012/139897 A1 (BASELL POLIOLEFINE SRL [IT]; GUIDOTTI SIMONA [IT]; MORINI GIAMPIERO [I) 18 October 2012 (2012-10-18)<br>* the whole document *<br>----- | 1-9 | |
| A | WO 2011/061134 A1 (BASELL POLIOLEFINE SRL [IT]; COLLINA GIANNI [IT]; CIARAFONI MARCO [IT]) 26 May 2011 (2011-05-26)<br>----- | 1-9 | |

TECHNICAL FIELDS SEARCHED (IPC)

C08F

The present search report has been drawn up for all claims

1

| Place of search | Date of completion of the search | Examiner |
|---|---|---|
| Munich | 14 October 2013 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 15 9360

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2013

| Patent document cited in search report | Publication date | Patent family member(s) | Publication date |
|---|---|---|---|
| US 6221984 B1 | 24-04-2001 | AT 229988 T | 15-01-2003 |
| | | DE 19722569 A1 | 03-12-1998 |
| | | EP 0881239 A1 | 02-12-1998 |
| | | ES 2186045 T3 | 01-05-2003 |
| | | JP H1171432 A | 16-03-1999 |
| | | US 6221984 B1 | 24-04-2001 |
| WO 2012139897 A1 | 18-10-2012 | NONE | |
| WO 2011061134 A1 | 26-05-2011 | CN 102597022 A | 18-07-2012 |
| | | EP 2501727 A1 | 26-09-2012 |
| | | US 2012232221 A1 | 13-09-2012 |
| | | WO 2011061134 A1 | 26-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009019169 A
- US P4298718 A
- US P4495338 A
- EP 728769 A
- EP 782587 A